# EUROPEAN PATENT SPECIFICATION

(11) **EP 2 040 898 B1**
(45) Date of publication and mention of the grant of the patent: **25.05.2011**
(21) Application number: 07765187.5
(22) Date of filing: 13.07.2007
(51) Int. Cl.: B29C 44/22, B29C 44/04

(54) **LATEX BASED MULTIPLE LAYER BEDDING OR SEATING FOAMS AND METHOD OF ITS PRODUCTION**
MEHRLAGIGE SCHAUMSTOFFE FÜR BETTEN ODER SITZEN AUF LATEXBASIS UND HERSTELLUNGSVERFAHREN DAFÜR
MOUSSES MULTICOUCHES POUR LITS OU SIEGES À BASE DE LATEX ET PROCÉDÉ POUR LEUR PRODUCTION

(30) Priority: 14.07.2006 EP 06014649
(43) Date of publication of application: 01.04.2009
(73) Proprietor: Latexco Nv, 8700 Tielt (BE)
(72) Inventor: GHESQUIRE, Vincent, Commerce, GA 30529 (US); ANNAERT, Herman, B-9308 Hofstade (BE); BOLLIOU, Alexander, B-8750 Wingene (BE)
(74) Representative: BiiP cvba
(86) International application number: PCT/EP2007/006240
(87) International publication number: WO 2008/006606

(56) References cited:
- DE-A1- 3 306 425
- GB-A- 728 277
- US-A- 5 669 094
- US-A1- 2006 048 303
- US-B1- 6 782 575

## Description

### TECHNICAL FIELD

The present invention relates to latex based multiple layer foams for use in a bedding or seating product according to claim 1, in which the foam has a multiple latex layer, said multiple latex layer being produced from a process according to claim 9.

In particular , the present invention refers to a process for continuous manufacture of latex based multiple layer topper of a thickness greater than conventional thickness currently achievable , density, colour , hardness and, more particularly and preferentially, to continuous manufacture of multiple layer toppers having different densities.

### BACKGROUND OF THE INVENTION

US-A-2006048303 describes a bedding product according to the preamble of claim 1.

Toppers for use in bedding or seating products are known. These toppers extend across the entire width and length of the particular bedding or seating product. If the particular bedding or seating product is a mattress, typically one such topper is placed on one side of the mattress core, and a second topper is placed on the opposite side of the mattress core, thereby effectively "sandwiching" the mattress core. This combination then typically is covered with an upholstered fabric covering.

Toppers have been designed so as to provide multiple degrees of stiffness or firmness. In particular, in a bedding structure, which includes an innerspring mattress and a topper, the topper includes a sheet of a foam which is glued. While the glue results in added thickness to the topping, this additional thickness also provides a stiffness which may prove uncomfortable to a user and which does not adapt itself to the supporting structure for the topper or mattress ('adaptability'). In addition, the glue hinders the quilting operation.

As can be seen from the above, toppers with increased thickness are desired.

A typical process for manufacture of the mentioned toppers involves a plurality of molds with a laying surface for latex foam material and a plurality of protuberances useful to the formation of recesses. Each mold includes a cover through which foam emulsified with air and devoid of swelling media is injected until complete filling in of the mold.

Each mold is placed on a carrier and all the carriers separated from each other are moved through a tunnel vulcanizer which is steam heated.

At the end of the manufacturing process each single mold is open and the product with recesses is removed. The said process enables to manufacture single topper products of limited thickness due to the undervulcanization as a result of lack of heat transfer.

The heat transfer can be improved by using aluminium pins however this results in lack of flexibility of choice in length, width and the presence of pin holes and pattern, uniformity in density and thickness across the topper.

Accordingly, there remains a need for foam products, such as toppers, having flexibility and uniformity in density, thickness and width, which are relatively easy and inexpensive to manufacture, and which do not need to be formed simultaneously as in a foam block later on being cut and which does not comprise the presence of pinholes and patterns, said topper also addressing the above mentioned drawbacks such as need for glueing .

The above-mentioned drawbacks and limitations have been overcome by a foam for use in a bedding or seating product, in which the foam is a multiple latex layer foam, according to the characterizing part of claim 1.

With the multiple layer application of latex , single multiple layer foam products, such as a topper, may be achieved without the need for the foam being glued or otherwise attached to one another while maintaining a high level of degree of flexibility on varying parameters such as thickness, width, density and others.

It is a further object of the invention to provide a thick multilayer foam of the type to be used as a topper for a conventional mattress. More specifically, it is an object of the invention to provide a topper on the preferred order of thickness of 7 to 10 cm ; preferably from 3 to 9 cm thick that has the area of a conventional mattress. This topper mattress is placed over a conventional mattress and is used to provide the comfort of latex foam without the expense of replacing the conventional mattress providing the benefits as stated hereinabove.

The topper of the present invention is for use on top of an existing conventional mattress, to increase the comfort of the mattress while utilizing an existing conventional mattress. The topper can be used as an after market product and placed on top of a mattress. Alternatively, the topper can be placed on an unfinished mattress (either a conventional mattress including steel springs or a foam mattress) and the topper and the mattress is then covered with fabric.

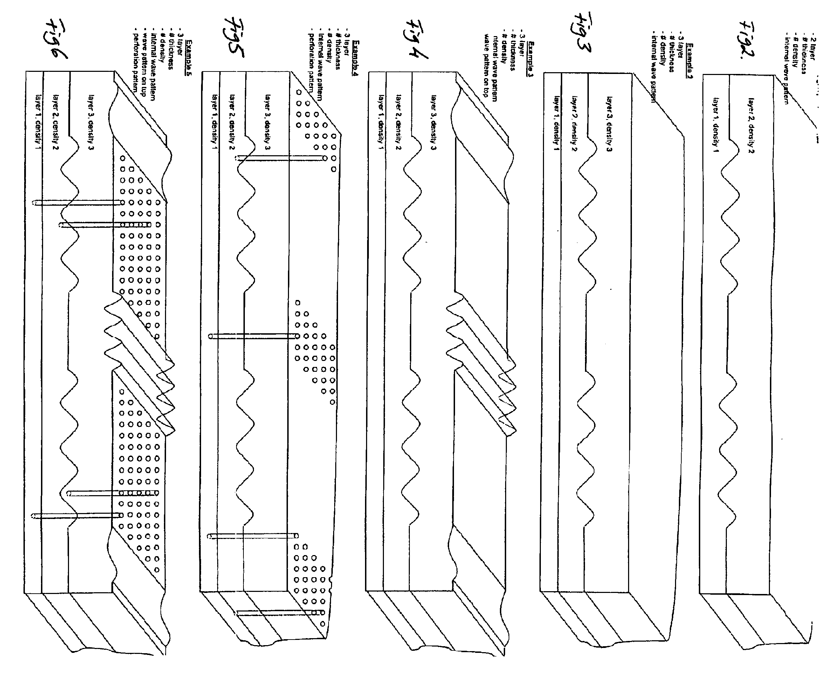

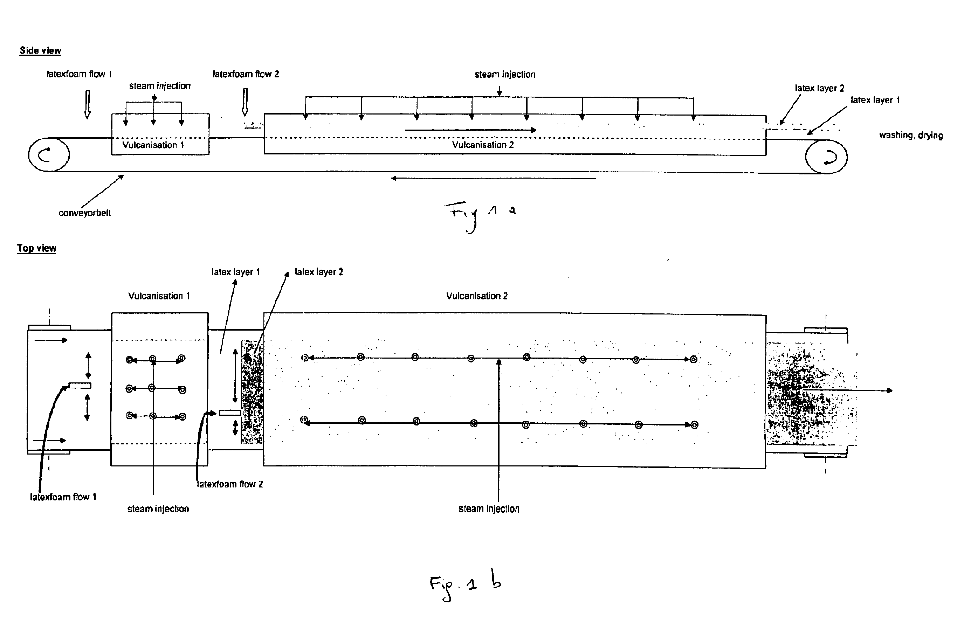

These and other preferred aspects of the invention are described in more detail below and will be better appreciated from the detailed description including the Figure 1 to 6 and the Example.

According to another embodiment of the present invention the invention is directed to a continuous process of making the multiple layer latex foam comprising the steps of: applying multiple latex layers and curing the latex layers by multiple pouring and vulcanization stations, thereby forming the multiple layer topper of the present invention.

### DETAILED DESCRIPTION OF THE INVENTION

The present invention is directed to a product according to claim 1.

### Latex foam:

"Latex" is herein defined as a dispersion of polymeric particles in a continuous phase, the polymeric particles preferably having a size range of from 10 to 1000 nm. The latex foam material can be prepared from natural rubber latex or from one or more of such synthetic latexes as polybutadiene/ styrene latex, polybutadiene/acrylonitrile latex, polychloroprene latex and the like or from a mixture of natural rubber latex and one or more such synthetic latexes. The latex foam includes conventional latex foam as well as visco-elastic latex foam.

The solids content of suitable aqueous latexes is from 20 to 75% by weight. Preferred latexes have a solid content of from 50 to 75% by weight.

Suitable polymer latexes are all dispersions in which the solid is dispersed in a liquid phase and this phase in turn forms an emulsion with a further liquid phase. Examples are latexes of polymers consisting of dienes or olefinically unsaturated monomers and copolymers thereof, such as polystyrene-butadiene latex, polybutadiene latex, polyisoprene latex, natural rubber latex, acrylonitrile-butadiene latex, polychloroprene latex, polydichlorbutadiene latex, latex of a copolymer of chloroprene and dichlorobutadiene, polyisoprene latex, latex of chlorinated polyisoprene or (meth)acrylate latex. Dispersions of polyurethanes or other dispersions in which polymers are dispersed in water with the aid of emulsifiers or dispersing agents are also suitable, however.

Preferred latexes include latexes of natural rubber, styrene-butadiene rubber (SBR), SBR having low styrene content (up to 27%), nitrile rubber (NBR), isoprene rubber, neoprene rubber, polybutadiene rubber,, isobutylene-isoprene rubber (IIR), copolymers of acrylonitrile, methacrylonitrile, acrylates, methacrylates, vinylpyridine with butadiene or 2-chloro-1,3-butadiene and chlorinated polyethylene or mixtures of any of these.

Highly preferred arc latexes of natural rubber, styrene-butadiene rubber, nitrile rubber, polybutadiene rubber, isoprene rubber or copolymers comprising acrylates.

Polymer-containing latexes, such as e.g. SBR (styrene-butadiene rubber) or NBR (acrylonitrile-butadiene rubber), polychloroprene, polybutadiene, polyisoprene, natural rubber latex, polyvinyl chloride, (meth)acrylate dispersions or dispersions of copolymers thereof, are conventionally available commercially in solids concentrations of more than 50%. These concentrations can be achieved e.g. by increasing the concentration of low-concentration polymer latexes. The concentration of natural rubber latex can, for example, be increased from 30% to 60% solids.

Other preferred latexes are combinations of synthetic and natural latex. Preferred proportions of natural latex to synthetic latex can be varied from 1:20 to 6:4. Highly preferred proportions of natural to synthetic latex are more than 1:1 The proportions should be optimized according to the latex used.

As said hereinabove, methods of obtaining conventional toppers made latex foam can be those where latex being poured into a closed mould provided with aluminium pins to ensure good heat conduction, and subsequently being vulcanised, washed and dried into an end product. As a result of the presence of the aluminium pins in the closed mould, the end product comprises vertical, continuous recesses that ensure a proper ventilation of the mattress but on the other hand have fixed pattern, presence of pinholes and density variations across the topper. An alternative method for producing latex foam is the pouring of latex foam on an endless conveyor belt, followed by vulcanisation, washing and finally drying. The maximum height of the topper built up of latex foam is approximately 5 cm, because heat cannot be introduced into the core of the latex material sufficiently quickly due to the absence of aluminium pins on the conveyor belt. Thus, owing to the absence of the aluminium pins on the conveyor belt, the latex plate that is obtained does not have any vertical, continuous channels.

The process of the present invention is described in claim 9.

More specifically, the present invention is directed to a continuous process for manufacture of multiple layer latex foam products of unlimited length envisaged to form toppers, cushions and the like, comprising the following steps:
moving forward continuously, at a given speed, a plurality of laying planes of predetermined size or a conveyer belt between a first and a second pouring station, between which a first vulcanizing station is interposed, pouring latex foam at the first pouring station until forming a first layer of determined thickness, on said laying planes, vulcanizing at a first vulcanizing station, moving to a second pouring station and pouring latex foam on a second pouring station moving at a second vulcanization station and vulcanizing removing at the second station the vulcanized product;

According to another embodiment, the plurality of laying planes of predetermined size or via a conveyer belt, placed between the first and the second and /or subsequent pouring station, touching each other and forming a continuous surface for making such said multiple latex layer foams of unlimited length.

In agreement with a preferential execution form, the process envisages the possibility of continuously pouring the latex foam material on an endless conveyor belt, followed by vulcanisation station placed between the first and the second pouring station; carrying out simultaneously the pouring and vulcanization in the pouring and vulcanization stations

Preferentially the speed of the continuous process is between 0.25 and 2.5 m/min and, more preferentially, between 0.5 and 2.5m/min Preferably, the process of the present invention contain 3 pouring and vulcanization stations.

A second feature is represented by a plant for manufacture of latex foam products of unlimited length, envisaged to form mattresses, cushions and the like.

The plant includes pouring means such as pouring , spraying techniques for latex foam material placed in a first and second and/or subsequent pouring stations, means for the laying of the latex foam material each provided with a laying plane of predetermined size or via a conveyer belt, one or more of a vulcanization station, operating means for the laying means, removing means of the vulcanized first layer to be placed in a second and/or subsequent pouring station.

The vulcanization can be carried out by using steam heating, mold heating, microwave heating, hot air heating. Vulcanization processes are well described in the art such as in US 6,920,643.

In a preferred embodiment, the process is being performed without stopping the manufacturing cycle occurring between the first pouring and second and/or subsequent pouring station.

In a highly preferred process for the manufacture of the multiple layer latex foam of the present invention, the following process is used :
First, an endless, one-layered latex foam product is manufactured, preferably on a continuous belt, in a thickness which corresponds to the thickness of 1.5.to 5 cm The latex foam which is used for this first layer is, preferably, a foam of higher thickness and/or a higher specific weight; . This first layer of the continuously manufactured latex foam topper product is then vulcanized in a first vulcanization station.

According to another embodiment, impressions can be created in the contour of the first layer. After creating the impressions or patterns, the first layer is then vulcanized. With a passage now through the second pouring station of the second layer, there arises a second layer latex foam of lower thickness and/or a lower specific weight.

The second layer not only causes the definitive and uniform thickness of the topper, but also fills the impressions or patterns, which are impressed in the first layer. The second latex foam layer is therefore the pouring material, which is poured in the form which is impressed into the first latex form coating. The second coating is then subsequently vulcanized in a second vulcanization station.

Similar as to the second layer, subsequent layers can be poured and vulcanized in further pouring and vulcanization stations.

It should be noted that the different density can be used in the different layers of the multiple layer latex foam.

In order to make the places of different density and thickness visible to consumers, the layers can receive a colour printing there. Apart from the colour, other characteristics can be added such as for example, by supplying additives or aromatics.

Through the invention, foam products such as toppers can receive characteristics other than those with conventional toppers. The toppers made according to the present invention can be impressed, receive, uniformly distributed over the entire surface, a stamping in the different layers in the form of straight grooves, grooves in waving lines, or in zigzags, grids, naps, or the like.

It is also possible, in accordance with the present invention, to provide, through the choice of the layer thicknesses, density and compositions various support and resilience values of the multiple latex layer foam products.

The multiple layer toppers may contain perforations. Combinations of perforations having different sizes can be used. Sizes of the perforations are between 0.5 and 5 cm.

The multiple layer toppers according to the present invention may also contain profiles.

According to yet another embodiment, there may be provided a multiple layer topper including a convoluted top or convoluted second layer, which enhances user comfort.

According to another embodiment the multiple layer topper of the present invention is made as a topper for a conventional mattress, which rests upon a conventional box spring.

The topper is laid on top of the top surface of conventional mattress and is held in position by the friction between the mattress and the top of conventional mattress. In addition, a mattress pad, typically made of quilted cotton material can be placed over the mattress topper, and the mattress cover typically has prefabricated corners that are thick enough to hold both mattress topper and mattress together as a unit. Alternatively, the topper is placed on a mattress that can be either conventional mattress with steel springs, a foam mattress (either latex foam, urethane foam or other polymeric foams) or another type of mattress. The topper and the mattress are held together by a fabric cover that is sewn around the exterior of the mattress, as is the case with most conventional bedding mattresses. The multiple layer topper may also comprise further layers in addition to the top layer and second and/or subsequent latex layer. Such a layer may be the bottom layer made of latex foam.

Alternatively, different layers may be added which are alternating layers existing of latex foam and foam selected from polyolefin, polyurethane, polystyrene or polyester or visco-elastic latex or mixtures thereof.

### Example:

The base layer of the multiple layer topper consists of commercially available latex. This base latex layer is poured, rolled out or placed on the support belt or tendering frame of an installation for the continuous production of latex foam sheets, which is commonly used in the industry. A liquid latex foam first layer is spread over the base layer. The latex foam mixture can consist of natural latex or synthetic latex, like Intex 2720 or Intex 2731 (commercially available from Polimeri Europa) or any other available foam latex or mixture. The top surface of the latex foam can be profiled in different zones during the curing process of the latex foam. The combined layers follow the process on the continuous production installation through the different steps of pouring stations and vulcanization stations and subsequent the washing, pressing, drying of the end product. If desired, after the drying step, the combined layers can be perforated in a regular pattern with holes of the same diameter or a zoned pattern with pins of different diameter. Finally the product is cut to length and width, and can be produced in sheets or rolls

The multiple layer topper can be used in health care industry in particular as pressure reducing support for those people suffering from decubitus in acute care and long term hospitalization instances.

Other applications include cosmetic industry such as pads, automotive and aircraft industry, upholstered furniture and technical articles. For instance, full foam seats, top pads for the seats and restraints for back and head, all made from the beddings of the present invention can be used in cars and aeroplanes. Other applications include the use of carpet backings, foamed seat saddles for motorbikes, gaskets between a car body and its lights, lip seals of air filters for engines and insulating layer on car parts and engine parts to reduce sound and vibration. It will be appreciated that each specific application puts its own demands on the beddings to be used. Important characteristics in this connection are density, hardness, resilience and dampening behaviour of the bedding and in order to fit each application, these characteristics should be optimally balanced and adjusted.

Other suitable applications are those where energy management is required. The bedding is particularly advantageous for use in vehicular applications such as door panels, instrument panel topper pads, air bag doors and the like.

In addition the multiple layer topper of the present invention may further comprise sheets of acrylonitrile-butadiene-styrene, high-impact polystyrene (HIPS), polyethylene terephthalate (PET), polyethylene, polypropylene, ethylene vinyl acetate, polyvinyl acetate (PVA), polyvinyl chloride (PVC), olefins including thermoplastic olefins (TPO) and the like. The multiple layer topper of the present invention may also include natural or synthetic fibers for imparting strength. The foam composite is also preferably shape formable and retainable to conform to the substrate for any particular application. Additionally, the multiple layer topper of the present invention may include organic and/or inorganic fillers. Furthermore, additional additives may be incorporated into bedding of the present invention such as but not limited to flame retardants, anti-fogging agents, ultraviolet absorbers, thermal stabilizers, pigments, colorants, odour control agents, and the like.

In another embodiment customizing the multiple layer topper, for its use as a bedding can be done by a potential user who completes a questionnaire to aid in the analysis of that users "sleep profile and comfort" profile. The sleep-comfort profile assesses such factors as the user's general health and sleep habits.

## Claims

1. A bedding or seating product comprising a multiple layer latex foam said multiple layer foam comprising a first layer of latex foam and a second and/or subsequent layer of latex foam **characterized in that** the first foam layer was vulcanized prior to the pouring of the latex material of the second layer onto the first layer.

2. A bedding or seating product according to claim 1, wherein said multiple layer latex foam is used as a topper.

3. A bedding or seating product according to claim 2, wherein said topper has a thickness of from 7 to 10 cm.

4. A bedding or seating product according to claim 2 or 3 said topper comprising:
a top layer of latex foam having a thickness of about 1.5 to 5 cm and a second and/or subsequent layer of a latex foam having a thickness of about 1.5 to 5 cm.

5. A bedding or seating product According to claims 1-4 further comprising different layers which are alternating layers existing of latex foam and foam selected from polyolefin, polyurethane, polystyrene or polyester or visco-elastic latex or mixtures thereof.

6. A bedding or seating product according to claims 1-5 whereby different density can be used in the different layers of the multiple layer latex foam.

7. A bedding or seating product according to claims 1-6, wherein the first layer has a higher thickness and/or specific weight than the second or subsequent layers.

8. A bedding or seating product according to claims 1-7 wherein the total number of layers is three.

9. A process for manufacturing a bedding or seating product comprising a multiple layer latex foam **characterized by** :
a) pouring a first latex foam layer preferably on a continuous belt or tendering frame,
b) vulcanizing this first layer in a vulcanization station,
c) pouring a second latex foam layer onto the first vulcanized latex foam layer,
d) vulcanizing this second layer latex foam.

10. The process according to claim 9, further comprising the step of:
e) pouring and vulcanizing subsequent layers as in process steps a) to d) as identified in claim 9.

11. The process according to claim 9-10, the process comprising the following
steps: moving forward continuously, at a given speed, a plurality of laying planes or via a conveyer belt between a first and a second pouring station, between which a first vulcanizing station is interposed, said laying planes being of determined sizes, injecting latex foam at the first pouring station until forming a first layer of determined thickness, on said laying planes, vulcanizing at a first vulcanizing station, moving to a second pouring station and injection latex foam on a second pouring station moving at a second vulcanization station and vulcanizing removing at the second station the vulcanized product;

12. The process according to claim 11, whereby the plurality of laying planes, placed between the first and the second and/or subsequent pouring station, touching each other and forming a continuous surface for making such said multiple latex layer foams of unlimited length.

## Patentansprüche

1. Auflagerungs- oder Befestigungsprodukt, umfassend einen Latexschaum mit mehrfachen Lagen, wobei der genannte Schaum mit mehrfachen Lagen eine erste Lage aus Latexschaum und eine zweite und/oder darauffolgende Lage aus Latexschaum umfasst, **dadurch gekennzeichnet, dass** die erste Schaumlage vor dem Gießen des Latexmaterials der zweiten Lage auf die erste Lage vulkanisiert wurde.

2. Auflagerungs- oder Befestigungsprodukt nach Anspruch 1, wobei der genannte Latexschaum mit mehrfachen Lagen als eine oberste Lage verwendet wird.

3. Auflagerungs- oder Befestigungsprodukt nach Anspruch 2, wobei die genannte oberste Lage eine Dicke von 7 bis 10 cm aufweist.

4. Auflagerungs- oder Befestigungsprodukt nach Anspruch 2 oder 3, wobei die genannte oberste Lage Folgendes umfasst:
eine Decklage aus Latexschaum mit einer Dicke von etwa 1,5 bis 5 cm sowie eine zweite und/oder darauffolgende Lage eines Latexschaums mit einer Dicke von etwa 1,5 bis 5 cm.

5. Auflagerungs- oder Befestigungsprodukt nach Anspruch 1 - 4, ferner umfassend verschiedene Lagen, die abwechselnde Lagen sind, die aus Latexschaum und Schaum bestehen, der ausgewählt ist aus Polyolefin, Polyurethan, Polystyrol oder Polyester oder viskoelastischem Latex oder deren Mischungen.

6. Auflagerungs- oder Befestigungsprodukt nach Anspruch 1 - 5, wobei verschiedene Dichten in den verschiedenen Lagen des Latexschaums mit mehrfachen Lagen eingesetzt werden können.

7. Auflagerungs- oder Befestigungsprodukt nach Anspruch 1 - 6, wobei die erste Lage eine größere Dicke und/oder ein höheres spezifisches Gewicht aufweist, als die zweite oder die darauffolgenden Lagen.

8. Auflagerungs- oder Befestigungsprodukt nach Anspruch 1 - 7, wobei die Gesamtzahl der Lagen drei beträgt.

9. Verfahren zur Herstellung eines Auflagerungs- oder Befestigungsprodukts, umfassend einen Latexschaum mit mehrfachen Lagen, **gekennzeichnet durch**:
a) das Gießen einer ersten Latexschaumlage, bevorzugt auf einem Endlosband oder einem Tenderrahmen,
b) das Vulkanisieren dieser ersten Lage in einer Vulkanisierungsstation,
c) das Gießen einer zweiten Latexschaumlage auf die erste vulkanisierte Latexschaumlage,
d) das Vulkanisieren dieser zweiten Latexschaumlage.

10. Verfahren nach Anspruch 9, ferner umfassend den folgenden Schritt:
e) das Gießen und Vulkanisieren darauffolgender Lagen wie bei den Verfahrensschritten a) bis d), wie in Anspruch 9 identifiziert.

11. Verfahren nach Anspruch 9 - 10, wobei das Verfahren die nachfolgenden Schritte umfasst:
die kontinuierliche Vorwärtsbewegung bei einer bestimmten Geschwindigkeit einer Vielzahl von Auslegungsebenen oder mit einem Förderband zwischen einer ersten und einer zweiten Gießstation, zwischen denen eine erste Vulkanisierungsstation eingeschoben ist, wobei die genannten Auslegungsebenen in festgelegten Größen vorhanden sind, das Einspritzen des Latexschaums an der ersten Gießstation bis zur Bildung einer ersten Lage mit festgelegter Dicke, das Vulkanisieren an den genannten Auslegungsebenen an einer ersten Vulkanisierungsstation, das Fortbewegen zu einer zweiten Gießstation und das Einspritzen von Latexschaum an einer zweiten Gießstation, das Fortbewegen zu einer zweiten Vulkanisierungsstation und das Vulkanisieren, das Entfernen des vulkanisierten Produkts an der zweiten Station;

12. Verfahren nach Anspruch 11, wobei die Vielzahl der Auslegungsebenen zwischen die erste und die zweite und/oder darauffolgende Gießstation platziert wird, wobei diese sich berühren und eine kontinuierliche Oberfläche zum Erzeugen dieser genannten Latexschäume mit mehrfachen Lagen in unendlicher Länge bilden.

## Revendications

1. Produit pour literie ou assise comprenant une mousse de latex multicouche, ladite mousse multicouche comprenant une première couche de mousse de latex et une deuxième couche et/ou des couches suivantes de mousse de latex, **caractérisé en ce que** la première couche de latex a été vulcanisée avant le versement du matériau de latex de la seconde couche sur la première couche.

2. Produit de literie ou d'assise selon la revendication 1, dans lequel ladite mousse de latex multicouche est utilisée comme sur-matelas.

3. Produit de literie ou d'assise selon la revendication 2, dans lequel ledit sur-matelas présente une épaisseur allant de 7 à 10 cm.

4. Produit de literie ou d'assise selon la revendication 2 ou 3, ledit sur-matelas comprenant :
une couche supérieure de mousse de latex ayant une épaisseur d'environ 1,5 à 5 cm et une deuxième couche et/ou des couches suivantes d'une mousse de latex ayant une épaisseur d'environ 1,5 à 5 cm.

5. Produit de literie ou d'assise selon les revendications 1 à 4, comprenant en outre différentes couches qui sont des couches alternées faites de mousse de latex et de mousse choisie parmi la polyoléfine, le polyuréthane, le polystyrène ou le polyester ou le latex viscoélastique, ou des mélanges de ces derniers.

6. Produit de literie ou d'assise selon les revendications 1 à 5, moyennant quoi différentes densités peuvent être utilisées dans les différentes couches de la mousse de latex multicouche.

7. Produit de literie ou d'assise selon les revendications 1 à 6, dans lequel la première couche présente une épaisseur et/ou un poids spécifique plus important que la deuxième couche ou les couches suivantes.

8. Produit de literie ou d'assise selon les revendications 1 à 7, dans lequel le nombre total de couches est trois.

9. Procédé de fabrication d'un produit de literie ou d'assise comprenant une mousse de latex multicouche, **caractérisé par** les étapes consistant à :
a) verser une première couche de latex de préférence sur une courroie sans fin ;
b) vulcaniser cette première couche dans un poste de vulcanisation ;
c) verser une deuxième couche de mousse de latex sur la première couche de mousse de latex vulcanisée ;
d) vulcaniser cette deuxième couche de mousse de latex.

10. Procédé selon la revendication 9, comprenant en outre les étapes consistant à :
e) verser et vulcaniser les couches suivantes comme dans les étapes a) à d) du procédé telles qu'identifiées dans la revendication 9.

11. Procédé selon la revendication 9 ou 10, le procédé comprenant les étapes suivantes :
déplacer vers l'avant de manière continue, à une vitesse donnée, une pluralité de plans de dépose, ou par l'intermédiaire d'une bande de transport, entre un premier et un deuxième postes de coulage, entre lesquels un premier poste de vulcanisation est interposé, lesdits plans de dépose présentant une taille déterminée ; injecter la mousse de latex au niveau du premier poste de coulage jusqu'à formation d'une première couche d'une épaisseur déterminée, sur lesdits plans de dépose ; vulcaniser au niveau d'un premier poste de vulcanisation ; les déplacer vers un deuxième poste de coulage et injecter la mousse de latex au niveau du deuxième poste de coulage ; les déplacer vers un deuxième poste de vulcanisation et vulcaniser ; retirer le produit vulcanisé au niveau du deuxième poste.

12. Procédé selon la revendication 11, moyennant quoi la pluralité de plans de dépose, placés entre le premier et le deuxième postes de coulage et/ou les postes de coulage suivants, sont en contact les uns avec les autres et forment une surface continue de sorte que la longueur de ladite mousse de latex multicouche fabriquée n'est pas limitée.
